# EUROPEAN PATENT SPECIFICATION

(11) **EP 0 899 935 B1**
(45) Date of publication and mention of the grant of the patent: **13.06.2007**
(21) Application number: 98115741.5
(22) Date of filing: 20.08.1998
(51) Int. Cl.: H04N 1/00, H04N 1/32

(54) **Facsimile machine transmitting and receiving digitally coded voice data**
Faksimilegerät zur Übertragung und Empfang von digital kodierten Sprachdaten
Dispositif de fac-similé pour la transmission et réception de données vocales codées numériquement

(30) Priority: 29.08.1997 JP 23397597
(43) Date of publication of application: 03.03.1999
(73) Proprietor: Oki Data Corporation, Tokyo 108-8551 (JP)
(72) Inventor: Endo, Hiroshi c/o Oki Data Corporation, Tokyo 108-8551 (JP)
(74) Representative: Böck, Bernhard

(56) References cited:
- US-A- 4 922 524
- US-A- 5 412 710
- US-A- 5 544 233
- US-A- 5 550 649
- PATENT ABSTRACTS OF JAPAN vol. 1997, no. 04, 30 April 1997 (1997-04-30) & JP 08 335992 A (BROTHER IND LTD), 17 December 1996 (1996-12-17) & US 5 717 498 A (ITOH SHINGO) 10 February 1998 (1998-02-10)

## Description

### BACKGROUND OF THE INVENTION

The present invention relates to a facsimile machine, more particularly to a facsimile machine that sends and receives voice messages as well as facsimile documents.

Methods of facsimile transmission by binary coded signaling have been standardized by the Telecommunication Standardization Sector of the International Telecommunication Union (ITU-T) in Recommendation T.30, entitled Procedures for Document Facsimile Transmission in the General Switched Telephone Network. Annex D of this Recommendation specifies an automatic terminal selection procedure that enables a called terminal to accept both voice and facsimile calls, with provisions for recording incoming voice calls. The called terminal is typically a facsimile machine with a built-in telephone answering facility and voice recording device, or a facsimile machine connected to an external telephone set with an answering machine and voice recording device.

In this procedure, if the calling terminal does not immediately send a calling tone identifying itself as a facsimile terminal, the called terminal responds to the call by sending an outgoing voice message or announcement. If the called terminal has been set to record incoming calls, the announcement invites the calling party to leave a voice message or start a facsimile transmission. Following this announcement, if an incoming voice signal is detected, the voice signal is recorded. If a facsimile calling tone is detected, the called terminal begins the facsimile receiving procedure.

If neither a voice signal nor a facsimile calling tone is detected within a certain time, the called terminal assumes that the calling terminal is a facsimile machine, and sends another outgoing message, inviting the calling party to begin facsimile transmission. Following this second outgoing message, the called terminal unconditionally initiates the facsimile receiving procedure, without waiting for a facsimile calling tone.

The facsimile calling tone is a half-second tone with a frequency of eleven thousand hertz (1100 Hz), which is preferably repeated after an interval of three seconds. One problem with the procedure described above is that the human voice, particularly the female human voice, often has an 1100-Hz frequency component, which may be mistakenly identified as a facsimile calling tone.

A second problem is that, to reduce the probability of such mistaken identification, the called facsimile machine normally does not recognize the facsimile calling tone until it has been detected twice, with an intervening three-second interval. Detection of the calling tone therefore takes longer than in normal facsimile reception.

A third problem is that if no facsimile calling tone is detected at all, because no facsimile calling tone is transmitted, because the calling tone is not repeated, or for some other reason, then facsimile transmission cannot begin until after two outgoing messages have been sent, with a lengthy wait between the outgoing messages.

US-A-4 922 524 shows a facsimile communication method including a voice relay mode. In one example, when this voice relay mode has been established, image information is first transmitted from a transmitter to a receiver and then a voice message arbitrarily created by an operator of the transmitter is also transmitted from the transmitter to the receiver, together with a telephone number of an addressee of the image information. Thereafter, the voice message is transmitted from the receiver to a telephone of the addressee having the telephone number to verbally apprise of the addressee of the fact that the image information addressed to the addressee has been transmitted to the receiver.

### SUMMARY OF THE INVENTION

It is accordingly an object of the present invention to enable both voice messages and facsimile documents to be transmitted reliably and promptly between two facsimile machines.

Another object of the invention is to enable a facsimile document and a related voice message to he transmitted together and reproduced at the same time.

A further object is to enable the automatic selection of a facsimile document or a voice message for transmission to a called terminal, according to the capabilities of the called terminal.

The invented facsimile machine as claimed has a conventional document scanning unit and printing unit, and also has a voice input unit, a voice output unit, and a voice coder/decoder or codec. The voice input unit converts a spoken voice message to an analog voice signal, which the voice codec converts to coded input voice data. The voice codec also converts coded output voice data to an analog voice signal, which the voice output unit converts to an audible voice message.

The control unit of the invented facsimile machine sends a signal to a transmitting facsimile machine indicating a capability to receive coded voice data. The transmitting facsimile machine can then send coded voice data, which will be decoded by the voice codec and reproduced as a voice message through the voice output unit. In a voice message sending mode, the control unit also sends a signal to a receiving facsimile machine selecting a capability of the receiving facsimile machine to receive coded voice data, if the receiving facsimile machine has this capability, and sends the coded voice data produced by the voice codec to the receiving facsimile machine.

The invented facsimile machine preferably employs a binary coded signaling procedure with an error correction mode, and sends and receives coded voice data as facsimile coded data.

When a facsimile document and voice message are mutually related, the invented facsimile machine preferably stores data indicating the relationship. In one type of relationship, the corresponding coded image data and coded voice data are sent and received together, and reproduced together after being received.

The invented facsimile machine preferably has a data buffer for storing coded image data and coded voice data, and preferably has a mode of operation that selects either coded image data or related coded voice data for transmission to a receiving terminal, according to the capabilities of the receiving terminal. The coded voice data may be first decoded by the voice codec, if the receiving terminal is only capable of receiving an analog voice signal.

### BRIEF DESCRIPTION OF THE DRAWINGS

In the attached drawings:
FIG. 1 shows the external appearance of a facsimile machine embodying the present invention;
FIG. 2 is a block diagram of the facsimile machine in FIG. 1;
FIG. 3 illustrates the format in which the facsimile machine in FIG. 1 sends and receives coded voice data;
FIG. 4 is a flowchart illustrating the procedure for sending a voice message;
FIG. 5 is a protocol diagram illustrating the transmission of a voice message;
FIG. 6 is a chart illustrating operations and guidance messages for sending a facsimile document and a related voice message;
FIG. 7 shows an example of a facsimile document;
FIG. 8 is a protocol diagram illustrating the transmission of a facsimile document and a voice message ;
FIG. 9 is a flowchart illustrating the receiving of a facsimile document and a related voice message.
FIG. 10 is a chart illustrating operations and guidance messages for sending a facsimile document or a voice message to a plurality of terminals;
FIG. 11 is a chart showing an example of data describing the terminals;
FIG. 12 illustrates the transmission of a facsimile document and voice message to the terminals described in FIG. 11;
FIG. 13 is a flowchart illustrating a procedure for sending different types of data or signals to different terminals;
FIG. 14 is a block diagram of part of another facsimile machine embodying the present invention;
FIG. 15 is a protocol diagram illustrating the sending of a voice message in reply to an outgoing message from a called terminal; and
FIG. 16 is a flowchart illustrating the sending of a facsimile document or voice message in reply to an outgoing message from a called terminal.

### DETAILED DESCRIPTION OF THE INVENTION

Embodiments of the invention will be described with reference to the attached illustrative drawings.

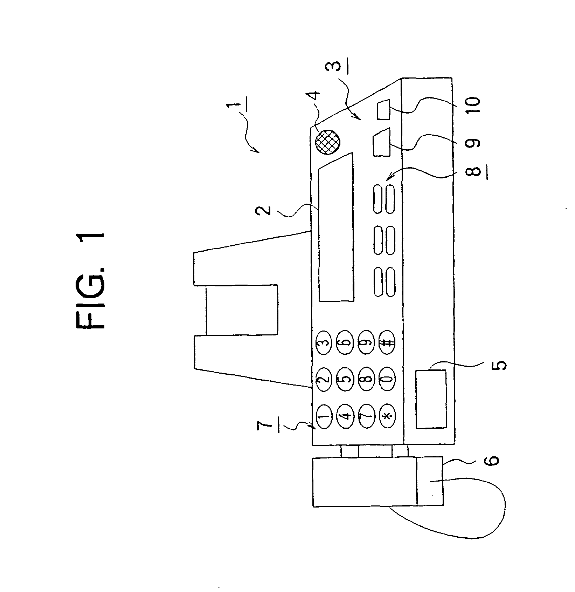

FIG. 1 shows a facsimile machine 1 having a liquid crystal display (LCD) panel 2, a control panel 3 with various buttons or keys, a microphone 4, a loudspeaker 5, and a handset 6. The microphone 4 functions as a voice input unit. The loudspeaker 5 functions as a voice output unit. The handset 6 functions as both a voice input unit and a voice output unit.

The control panel 3 has a standard telephone keypad 7, additional function and mode keys 8, a start key 9, and a stop key 10. The keypad 7 has digit keys from zero to nine, a star (∗) key, and a sharp (∓) key. The LCD panel 2 displays information such as telephone numbers, the time, guidance messages, and communication status messages.

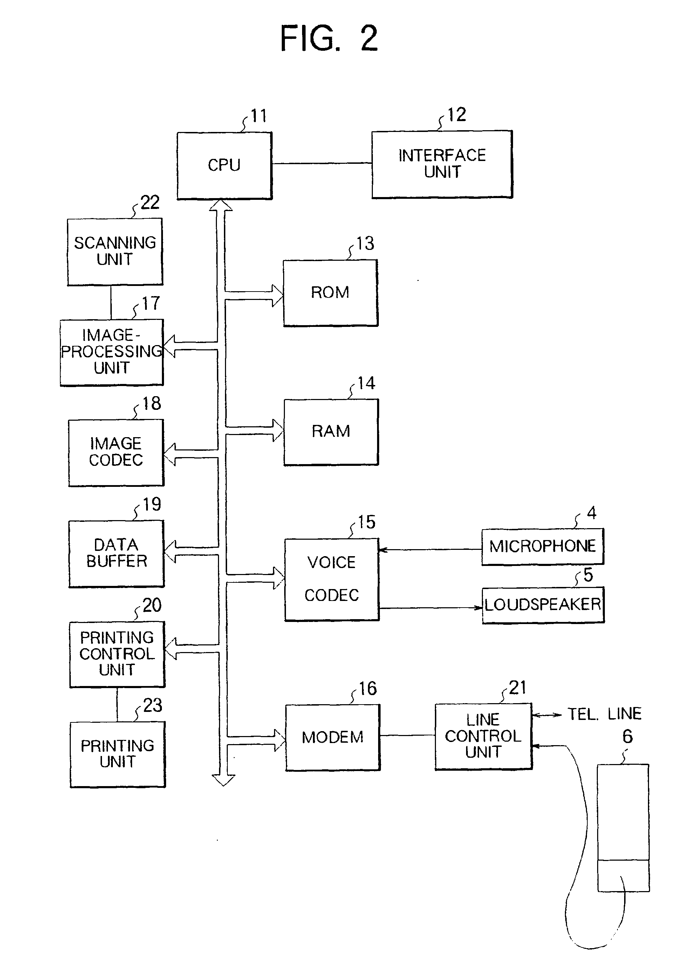

FIG. 2 is a block diagram of the facsimile machine 1. The control unit or central processing unit (CPU) 11 carries out computational tasks and control tasks, including direct memory access control, interrupt control, overall system control, communication control, network control, and flow control of facsimile data. The CPU 11 is also interfaced to the LCD panel 2 and control panel 3 in FIG. 1 by an interface unit 12, and is coupled by a data bus to a read-only memory (ROM) 13, a random-access memory (RAM) 14, a voice data coder/decoder or voice codec 15, a modulator-demodulator or modem 16, an image-processing unit 17, an image data coder/decoder or image codec 18, a data buffer 19, and a printing control unit 20.

The interface unit 12 sends information from the control panel 3 to the CPU 11, and displays information generated by the CPU 11 on the LCD panel 2.

The ROM 13 stores control programs executed by the CPU 11. The RAM 14 stores information such as telephone numbers.

The voice codec 15, which is coupled to the microphone 4 and loudspeaker 5, converts an analog voice signal received from the microphone 4 to digitally coded voice data, and converts digitally coded voice data to an analog voice signal that can be reproduced through the loudspeaker 5. The voice codec 15 may employ various coding methods. Two examples are the methods standardized in ITU-T Recommendations G.711, entitled Pulse Code Modulation (PCM) of Voice Frequencies, and G.721, entitled 32 kbit/s Adaptive Differential Pulse Code Modulation (ADPCM).

The modem 16 is coupled to a line control unit 21, which is coupled to the handset 6 and to a telephone line in a public telephone network. The line control unit 21 has an internal switching device (not visible) that connects either the handset 6 or the modem 16 to the telephone line, as selected by the CPU 11. The modem 16 converts digitally coded signals to a modulated carrier signal that can be transmitted on the telephone line, and performs the reverse conversion for carrier signals received from the telephone line.

The image-processing unit 17 is coupled to a scanning unit 22 that scans documents set in the facsimile machine 1, and outputs an analog image signal. The image-processing unit 17 performs thresholding operations that convert the analog image signal to digital image data.

The image codec 18 codes the image data produced by the image-processing unit 17, and decodes coded image data received from a distant facsimile machine. Various well-known coding methods may be employed, such as the modified Huffman method (MH), the modified read method (MR), and the modified MR method (MMR).

The data buffer 19 stores coded image data and coded voice data.

The printing control unit 20 is coupled to a printing unit 23 that prints facsimile documents received from a distant facsimile machine. The printing control unit 20 performs control of the operation of the printing unit 23, including control of the page size and resolution. Page sizes correspond to paper sizes such as letter size, legal size, or the standard European sizes (A4, A3, etc.). Resolution refers to dot resolution, e.g. two hundred dots per inch (200 DPI) or three hundred dots per inch (300 DPI).

The first embodiment can be used in one mode as a conventional facsimile machine to send and receive facsimile documents, and in another mode as a conventional telephone set to originate and receive telephone calls. In addition, the first embodiment can be used to send voice messages to another similar facsimile machine, as described below.

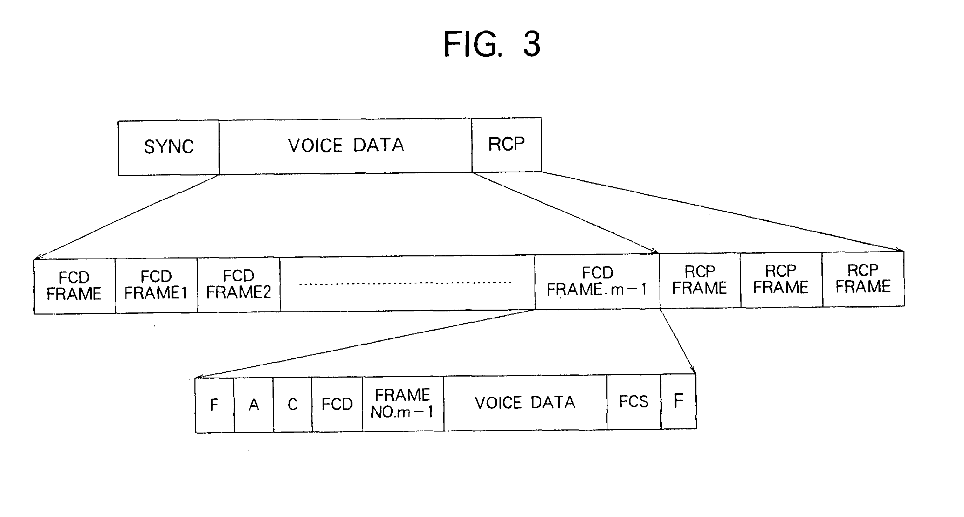

Voice messages are transmitted as facsimile coded data according to a high-level data link control (HDLC) protocol, in an error correction mode. The transmission procedure is defined in the above-mentioned ITU-T Recommendation T.30 and in ITU-T Recommendation T.4, entitled Standardization of Group 3 Facsimile Terminals for Document Transmission. Referring to FIG. 3, voice data frames are preceded by a synchronization (sync) frame and followed by a return-to-control-for-partial-page sequence (RCP). A voice data frame begins with a flag field (F), continues with an address field (A), a control field (C), a facsimile coded data field (FCD), the frame number, the coded voice data, and a frame check sequence (FCS), and ends with another flag field (F).

To send a voice message, the user uses the function and mode keys 8 to select the voice message mode. For example, the user presses a key that causes the CPU 11 and interface unit 12 to display a menu of modes on the LCD panel 2, then presses another key to select the voice message mode from the menu.

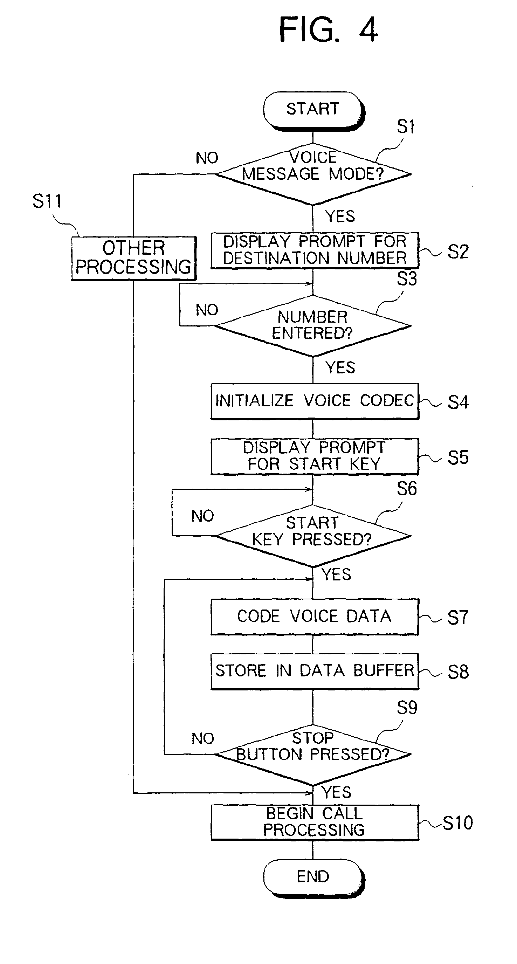

Referring to FIG. 4, the CPU 11 executes a routine that monitors input from the function and mode keys 8 and determines, in step S1, which mode is selected. If the voice message mode is selected, then in step S2, acting through the interface unit 12, the CPU 11 displays a guidance message or prompt on the LCD panel 2, instructing the user to enter the destination number to which the voice message is to be sent. The user enters the number of the destination facsimile machine on the digit keys of the keypad 7, then presses the start key 9 to indicate that the number has been entered. Alternatively, the user enters the number by pressing one of the function and mode keys 8, such as a speed dialing key. The CPU 11 monitors the key input in step S3 to determine when the complete number has been entered, then initializes the voice codec 15 in step S4, and performs other initialization in preparation for storing a voice message.

After this initialization, the CPU 11 displays another prompt on the LCD panel 2 in step S5, advising the user to press the start key 9, and waits in step S6 for the start key 9 to be pressed. When ready to begin recording the voice message, the user presses the start key 9 and starts speaking into the microphone 4. During the message, the LCD panel 2 displays a guidance message such as Now recording, press Stop key to end.' At the end of the message, the user stops speaking and presses the stop key 10.

In step S7, the voice codec 15 converts the analog voice signal from the microphone 4 to digitally coded input voice data, and outputs the coded voice data a frame at a time. Each coded frame is stored in the data buffer 19 in step S8. The CPU 11 monitors the stop key 10 in step S9. and repeats steps S7 and S8 until the stop key 10 is pressed.

When the stop key 10 is pressed, the CPU 11 stores a message profile in the data buffer 19. The message profile gives such information as the starting and ending addresses of the coded message data, the coding method (e.g., the PCM method of ITU-T Recommendation G.711, or the ADPCM method of ITU-T Recommendation G.721), and the destination facsimile number to which the message is to be sent. The CPU 11 then begins call processing in step S10. The call processing in this case comprises originating a call to the number entered by the user, and transmitting the coded input voice data stored in the data buffer 19, as described below.

If the user does not select the voice message mode, the CPU 11 proceeds from step S1 to step S11 to perform other processing, if necessary, then to step S10 to begin appropriate call processing.

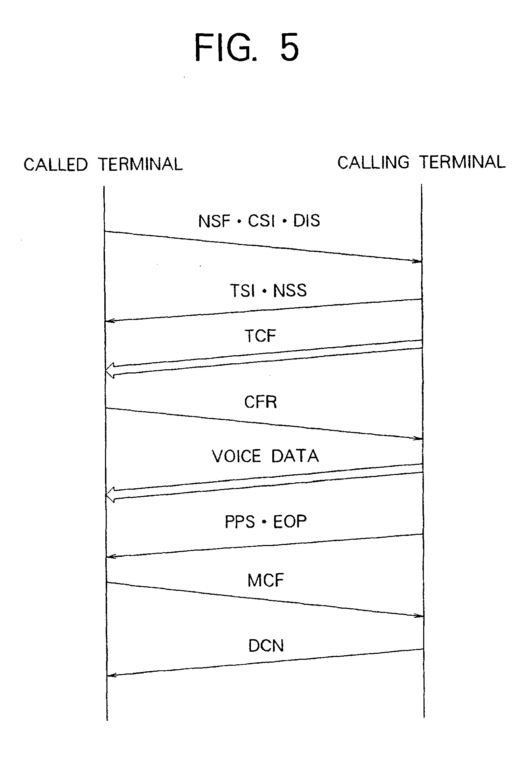

FIG. 5 outlines the call-processing step when a voice message is sent. The calling terminal and called terminal are both facsimile machines conforming to the first embodiment. The procedure in FIG. 4 was performed at the calling terminal.

After call establishment, without waiting to receive a facsimile calling tone (CNG) from the calling terminal, the called terminal sends a non-standard facilities signal (NSF), a called subscriber identification signal (CSI), and a digital identification signal (DIS), using the NSF and DIS signals to describe its capabilities to the calling terminal. In particular, the called terminal uses the facsimile information field (FIF) in the NSF signal to declare a capability for receiving coded voice data, and sets a bit in the DIS signal declaring a capability for use of the error correction mode.

Upon receiving these signals, the CPU 11 in the calling terminal recognizes the capability for reception of coded voice data from the NSF signal. Next, the CPU 11 reads the profile of the data to be transmitted from the data buffer 19, to determine whether the data to be transmitted are coded voice data or coded image data. In the present case, the data are coded voice data, so the calling terminal sends the called terminal a non-standard setup (NSS) signal selecting the use of the coded voice data reception capability and error correction mode. The calling terminal also sends a transmitting subscriber identification signal (TSI).

Next, the calling terminal sends a training check signal (TCF) to train the modem 16 in the called terminal. If training is successful, the called terminal replies with a confirmation-to-receive signal (CFR).

Upon receiving the training check, the calling terminal begins sending the coded voice data stored in its data buffer 19 to the called terminal, following the HDLC protocol shown in FIG. 3. When all of the coded voice data have been sent, the calling terminal sends a partial page signal (PPS) and an end-of-procedure signal (EOP).

The called terminal stores the received coded voice data as output voice data in its data buffer 19, together with a profile indicating such information as the coding method, the time at which the call was received, the facsimile number of the calling terminal, and the starting and ending addresses of the coded voice data. If all of the coded voice data are received successfully, the called terminal replies to the PPS and EOP signals with a message confirmation signal (MCF). The calling terminal then sends a disconnect signal (DCN), and both terminals disconnect from the telephone line.

Afterward, a person at the called terminal can use the control panel 3 of the called terminal to obtain a list of received data stored in the data buffer 19 of the called terminal. The list may be displayed on the LCD panel 2, or printed by the printing unit 23. Finding from this list that a voice message has been stored, the person can use the control panel 3 to give a command for the voice message to be reproduced.

The CPU 11 in the called terminal executes this command by initializing the voice codec 15 according to the coding method specified in the profile stored in the data buffer 19, then transferring the coded voice data from the data buffer 19 to the voice codec 15. The voice codec 15 decodes the coded voice data to generate an analog voice signal, which is reproduced through the loudspeaker 5, whereby the voice message is heard.

The first embodiment enables a voice message to be transferred from the calling terminal to the called terminal with a minimum of delay. The user of the calling terminal only has to enter the destination number and record the message. The user of the calling terminal does not have to wait for any operations to be performed at the called terminal. In particular, the user of the calling terminal does not have to listen to an outgoing message from the called terminal.

When a facsimile document is transmitted from the calling terminal to the called terminal, there is again no unnecessary delay, because the procedures of Annex D are omitted. The calling terminal does not have to wait for the called terminal to identify a facsimile calling tone or send an outgoing message. The reliability of the facsimile transmission is also improved, because the calling terminal receives the NSF, CSI, and DIS signals promptly, and because the called terminal does not have to make a selection between voice and facsimile operation.

These delays are avoided because voice messages are sent and received in the same way as facsimile documents, as facsimile coded data. A further advantage of this arrangement is that the called terminal does not need mechanical apparatus such as tape recording apparatus for recording analog voice signals. The two facsimile machines only require a data buffer 19, which many conventional facsimile machines already have, and a voice codec 15, which is typically a small and inexpensive integrated circuit. The voice codec 15 can also be implemented in software running on the CPU 11.

Another advantage of the first embodiment is that the facsimile machines only have to implement the usual T.30 procedures for sending and receiving facsimile data, and do not have to implement the optional automatic terminal selection procedures of Annex D. Yet another advantage is that since voice messages are digitally encoded, and since the error correction mode is employed, the voice messages are not degraded by adverse transmission line conditions, as sometimes happens with analog voice messages.

The first embodiment operates as an efficient combination of a facsimile machine and a voice mail terminal, making novel use of existing facsimile transmission procedures to transfer voice messages. Examples of voice messages that can be usefully sent by the first embodiment include announcements of meetings, messages requesting, confirming, or canceling appointments, and messages requesting information that the called party might need some time to obtain.

As a variation of the first embodiment, the capability for receiving coded voice data, and the selection of this capability, can be declared by the use of reserved bits in the standard digital identification signal (DIS) and digital command signal (DCS), instead of in the NSF and NSS signals.

Next, a second embodiment of the invention will be described. The second embodiment is a facsimile machine similar to the first embodiment, with the added capability to transmit a facsimile document together with a related voice message, and to reproduce a related document and message together.

The hardware configuration of the second embodiment is the same as in the first embodiment, shown in FIGs. 1 and 2.

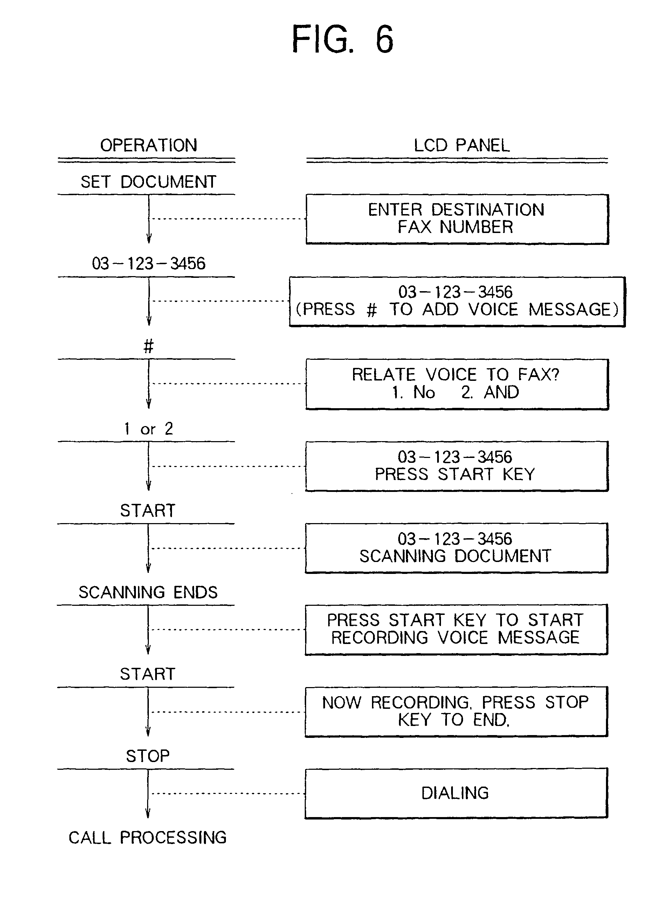

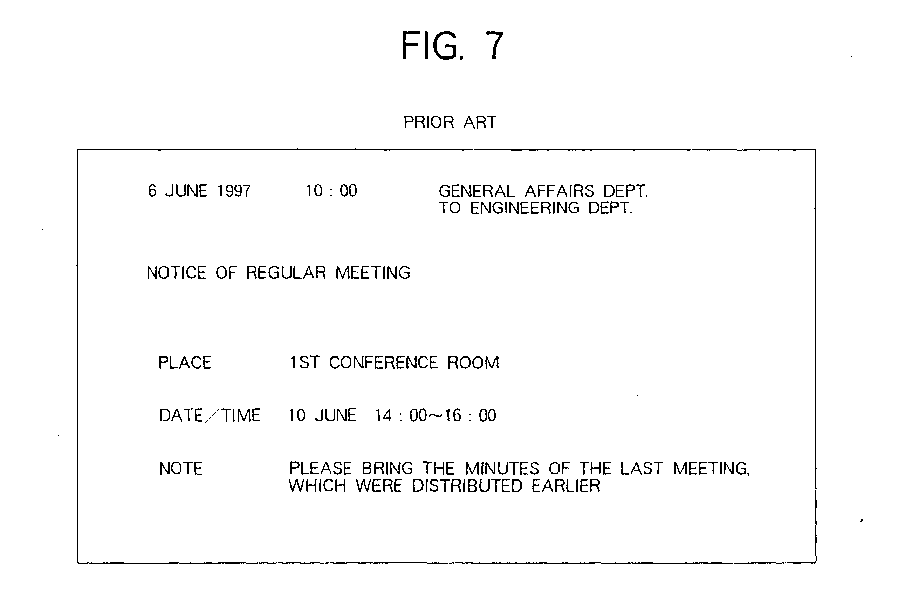

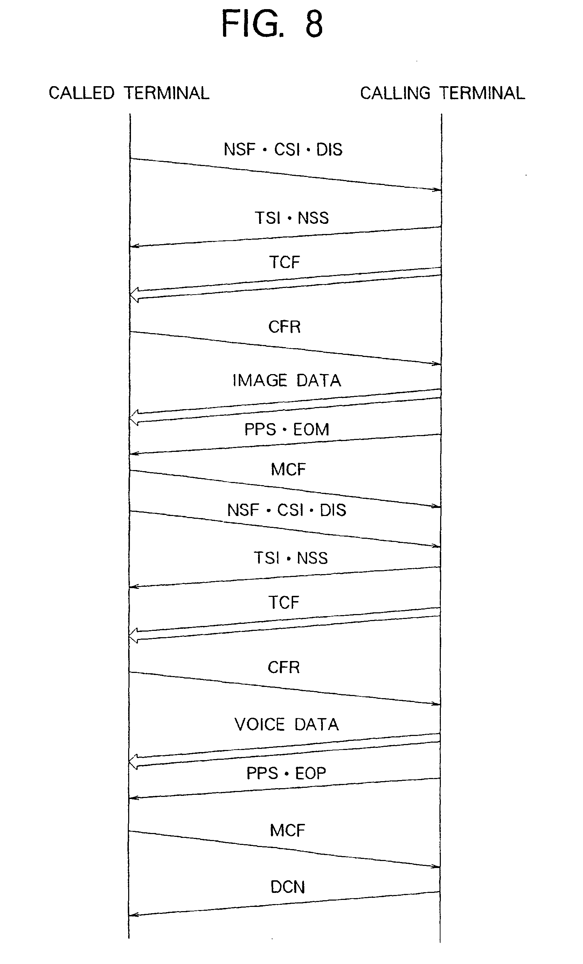

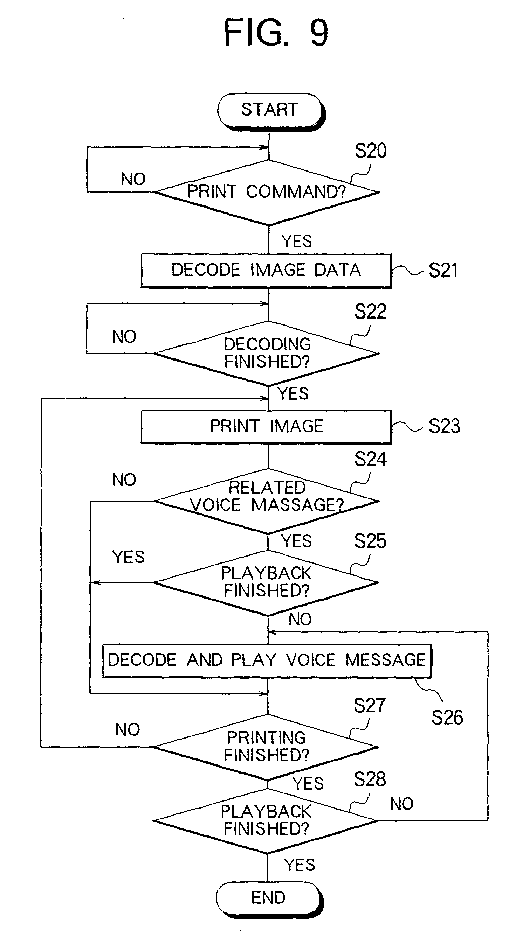

FIG. 6 illustrates the procedure for scanning a document and recording a related voice message at a calling terminal conforming to the second embodiment. FIG. 7 shows an example of a conventional document that could be accompanied by a novel related voice message. FIG. 8 shows the procedure for transmitting the document and voice message from the calling terminal to a called terminal conforming to the second embodiment. FIG. 9 illustrates the procedure for reproducing the document and voice message at the called terminal.

The user at the calling terminal begins by setting a document such as the one in FIG. 7 in the scanning unit 22, as indicated at the top left in FIG. 6. The presence of the document is detected and reported to the CPU 11. Acting through the interface unit 12, the CPU 11 displays a guidance message such as 'Enter destination fax number' on the LCD panel 2. Following this guidance, the user enters a number such as 03-123-3456 on the keypad 7. The number is displayed on the LCD panel 2, together with a prompt to press the sharp key (#) to add a voice message.

If the user wishes to send a voice message in addition to the document, the user presses the sharp key (#) on the keypad 7. When the sharp key is pressed, the CPU 11 displays a query on the LCD panel 2, asking if the voice message and document facsimile are mutually related. If the user presses digit key '1' (No), then the document and voice message will be sent together, but will be reproduced separately by the called terminal. If the user presses digit key '2' (designating the logical AND relationship), the document and voice message will be sent together and reproduced together.

After the user presses digit key '1' or '2,' the CPU 11 displays the destination facsimile number on the LCD panel 2 again, with further guidance asking the user to press the start key 9. When the user presses the start key 9, the scanning unit 22 starts scanning the document, and the LCD panel 2 displays a message indicating that the document is being scanned, while also continuing to display the destination facsimile number. The scanned image is processed by the image-processing unit 17 and coded by the image codec 18. The coded image data are stored in the data buffer 19.

The CPU 11 also stores a profile of the coded image data in the data buffer 19. The profile indicates the starting and ending addresses of the image data, the coding method, the page size, the resolution, and the destination facsimile number.

When the scanning unit 22 finishes scanning the document, if the sharp key (#) was pressed earlier, the CPU 11 displays a guidance message asking the user to press the start key 9 again to begin recording the voice message.

The rest of the procedure proceeds as in steps S6 to S10 in FIG. 4. When the user presses the start key 9, the CPU 11 displays a message such as 'Now recording, press Stop key to end.' The coded voice data and a profile of the coded voice data are stored in the data buffer 19. If the user pressed digit key '2' (AND), the CPU 11 adds information to the profile indicating that the coded voice data are related to coded image data also stored in the data buffer 19. This added information will be referred to below as AND data. The CPU 11 adds similar AND data to the profile of the coded image data, indicating the presence of a related voice message. When the user presses the stop key 10, the CPU 11 displays a 'Dialing' message on the LCD panel 2 and begins call processing.

In the call processing procedure illustrated in FIG. 8, following call establishment, without waiting to detect a facsimile calling tone, the called terminal sends NSF, CSI, and DIS signals to the calling terminal. The NSF signal declares that the called terminal has the capability to receive coded voice data, and the capability to relate the coded voice data to received image data. In the DIS signal, the error correction mode bit is set.

At the calling terminal, the CPU 11 notes the capabilities declared in the NSF and DIS signals, and checks the profiles stored in the data buffer 19 to determine what data are to be sent. In the present case, the CPU 11 finds both coded image data and related coded voice data, and sends the called terminal an NSS signal selecting the use of the error correction mode and the capability for relating document and voice messages, but not the capability for receiving coded voice data. This combination of selections informs the called terminal that the calling terminal intends to transmit a facsimile document that will be followed by a related voice message. A TSI signal is also sent from the calling terminal to the called terminal.

The coded image data stored in the data buffer 19 at the calling terminal are now transmitted by the usual facsimile transmission procedure. The calling terminal sends a training check (TCF), the called terminal replies with a confirmation signal (CFR), and the calling terminal sends the coded image data, followed by a partial page signal (PPS) and an end-of-message signal (EOM). The called terminal stores the transmitted image data in its data buffer 19, and stores profile data indicating the starting and ending addresses in the data buffer 19, the facsimile number of the calling terminal, and the time of reception, together with AND data indicating the existence of a related voice message.

If the coded image data were received successfully, the called terminal sends a message confirmation signal (MCF) to the calling terminal, then sends the NSF, CSI, and DIS signals again. The calling terminal replies with an NSS signal selecting the capabilities for receiving coded voice data and relating voice and image data, then transmits the coded voice data by the procedure already described in FIG. 4. The profile stored by the called terminal for the coded voice data is similar to the profile in the first embodiment, but also includes AND data indicating the existence of related image data.

After the call ends, a person at the called terminal uses the control panel 3 to obtain a list of data stored in the data buffer 19 of the called terminal. Finding that both a facsimile document and a voice message are stored, the person uses the control panel 3 to give a command for the called terminal to print the facsimile document.

Referring to FIG. 9, the CPU 11 at the called terminal executes a routine that waits in step S20 for a print command to be entered. When a print command is entered, in step S21, the image codec 18 decodes the stored image data. In step S22, the CPU 11 waits for the decoding to finish. In step S23, the printing unit 23 begins printing the decoded image data. In step S24, the CPU 11 reads the profile of the image data to determine whether there is a related voice message. If there is, then in step S25, the CPU 11 determines whether the voice message has already been completely reproduced or played back. If not, then in step S26, the CPU 11 sends coded voice data from the data buffer 19 to the voice codec 15, which decodes the data according to information given in the profile to generate an analog voice signal that is reproduced through the loudspeaker 5. If the voice message has already been completely reproduced, then step S26 is skipped.

In step S27, the CPU 11 determines whether printing of the image data has been completed, and returns to step S23 if not. When printing of the image data is completed, in step S28, the CPU 11 determines whether reproduction of the voice message has been completed, and returns to step S26 if not. The procedure in FIG. 9 ends when the received document has been completely printed and the received voice message has been completely reproduced.

When several coded facsimile documents and several voice messages are stored simultaneously in the data buffer 19 of the called terminal, the CPU 11 uses the AND data and other information in the profiles of the coded image data and coded voice data to relate the appropriate voice message to the appropriate document.

A voice message accompanying the facsimile document shown in FIG. 8 might be a message explaining what will be discussed at the meeting announced in the document, or a request to give the document to the person who will attend the meeting. More generally, a voice message can replace a covering letter that might be sent with a facsimile document, thus saving the user at the calling terminal the trouble of drafting a covering letter.

In the description above, the voice message is reproduced while the facsimile document is being printed. If the user at the called terminal wants to hear the voice message again after the document has been printed, the user can use the control panel 3 to select reproduction of the voice message alone, after printing has been completed. For example, if the voice message is a verbal explanation accompanying a drawing, the user can in this way hear the explanation while looking at the drawing.

As a variation of the second embodiment, the voice message can be recorded at the calling terminal before the document is scanned. As another variation, the coded voice data can be transmitted from the calling terminal to the called terminal before the coded image data.

Next a third embodiment of the invention will be described. The third embodiment is also a facsimile machine with the hardware configuration shown in FIGs. 1 and 2. The third embodiment has the additional capability to transmit the same coded data to multiple destinations, an operation often referred to as multicasting. As in the second embodiment, the facsimile machine has the capability to relate a voice message to a facsimile document, but the relation may be an OR relation instead of an AND relation.

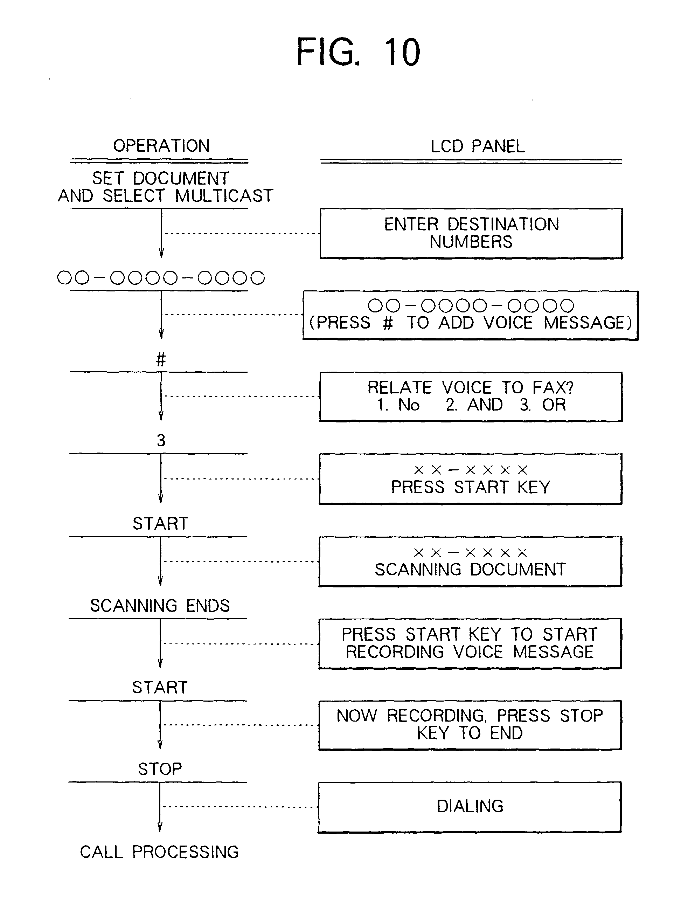

FIG. 10 shows the procedure followed in the third embodiment for scanning a document and entering a related voice message. The document and voice message in this case contain the same information. In the first operation, the user sets the document in the scanning unit 22 and selects the multicasting function. This selection is made by, for example, using the control panel 3 to display a list of functions on the LCD panel 2, and selecting the multicasting function from the list. The CPU 11 then displays a guidance message asking the user to enter the destination numbers.

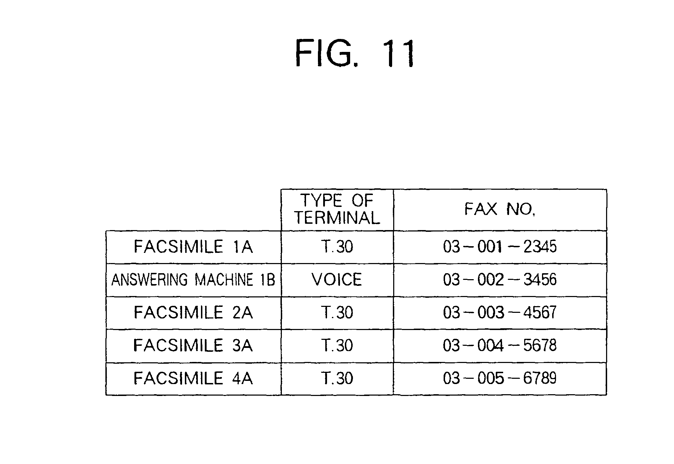

The user enters the numbers one by one on the keypad 7. After each number is entered, the CPU 11 stores the number in the RAM 14 and displays a message (not shown) on the LCD panel 2 asking the user whether the destination machine is a facsimile terminal, or a voice terminal such as a telephone answering machine. The user enters this information by pressing a key corresponding to a terminal type displayed on the LCD panel 2. The CPU 11 adds this information to the list of numbers stored in the RAM 14, as shown in FIG. 11. The notation 'T.30' in FIG. 11 designates a facsimile terminal.

After the user has pressed a key to indicate that the entire list of numbers has been entered, the CPU 11 displays the second message shown in FIG. 10, inviting the user to press the sharp key (#) to add a voice message. If the user presses the sharp key (#), the CPU 11 displays a message asking the user whether the voice message to be entered is unrelated to the facsimile document (1. No), related by an AND relationship (2. AND), or related by an OR relationship (3. OR). The AND relationship is as described in the second embodiment. The OR relationship tells the CPU 11 to send either the voice message or the facsimile document, but not both, to each destination number. If the destination machine is capable of receiving both voice messages and facsimile documents, preference is given to the voice message.

If the user selects the OR relationship by pressing digit key '3.' the CPU 11 reads the first number from the list stored in the RAM 14. displays this number on the LCD panel 2, and displays a guidance message asking the user to press the start key 9. The rest of the procedure proceeds as explained in the second embodiment, the user pressing the start key 9 once to start scanning the document, then once again to start recording the voice message, and pressing the stop key 10 at the end of the voice message.

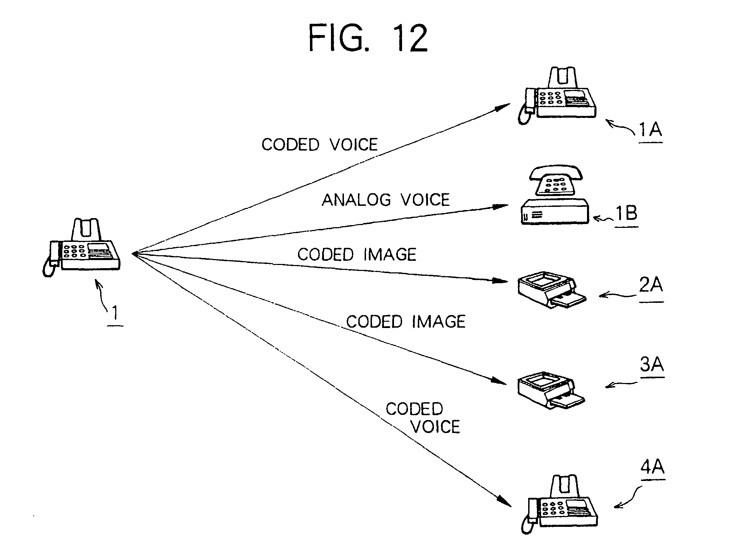

In the call processing, calls are originated one by one to the destination numbers stored in the RAM 14. The procedure will be described for the situation illustrated in FIG. 12, in which facsimile terminal 1A is a terminal of the invented type, voice terminal 1B is a telephone answering machine with a recording device, facsimile terminals 2A and 3A are conventional facsimile machines, and facsimile terminal 4A is another facsimile machine of the invented type. The calling terminal is the facsimile machine 1 at which the procedure in FIG. 10 was carried out.

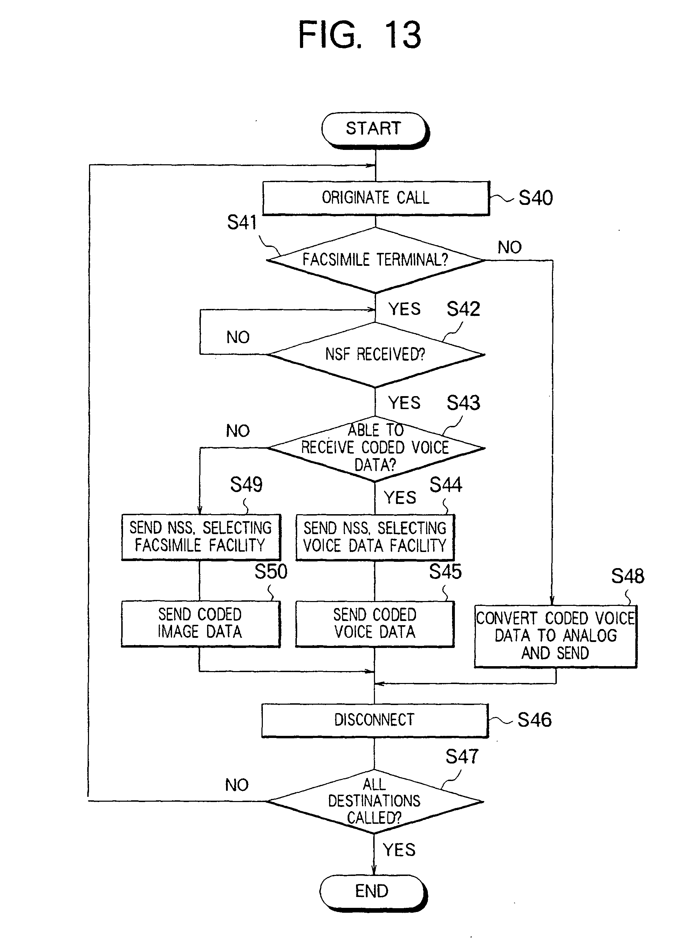

Referring to FIG. 13, in step S40 the calling facsimile machine 1 originates a call to the first terminal 1A on the list in the RAM 14. In step S41, the CPU 11 uses the information stored in the RAM 14 to determine whether the called terminal is a facsimile terminal. In the present example this is the case, so the calling facsimile machine 1 waits in step S42 to receive an NSF signal. In step S43, the CPU 11 determines from the NSF signal whether the called terminal has the capability to receive coded voice data. If this capability is present, the calling facsimile machine 1 sends an NSS signal selecting the use of this capability in step S44, and sends the coded voice data stored in the data buffer 19 in step S45.

In step S46, after sending the coded voice data and receiving a message confirmation signal (MCF) from the called terminal, the calling facsimile machine 1 disconnects from the line. In step S47, the calling Facsimile machine 1 determines from the information stored in the RAM 14 whether there are any further destinations to be called, and if there are, returns to step S40 to originate a call to the next destination terminal.

In the present example, the second destination terminal 1B is not a facsimile terminal, so the CPU 11 proceeds from step S41 to step S48, in which the coded voice data stored in the data buffer 19 are converted by the voice codec 15 to an analog voice signal, and the analog voice signal is sent to the called terminal. The analog voice signal is sent unchanged through the modem 16 and line control unit 21, without being converted to a modulated carrier signal or otherwise processed in the modem 16.

Before starting to send the analog voice signal, the CPU 11 waits for a certain time, to allow the called terminal to prepare to record the incoming voice message. Alternatively, the CPU 11 waits for the called terminal to send a tone indicating readiness to record the message. When transmission of the analog voice message is completed, the CPU 11 proceeds to the above-described steps S46 and S47, and returns to step S40 if there is another destination number to be called.

The third time step S40 is performed, the called terminal is a conventional facsimile machine 2A that is not able to receive coded voice data. This is indicated in the NSF signal received in step S42. The calling facsimile machine 1 therefore proceeds from step S43 to step S49, and sends an NSS signal selecting the normal facsimile receiving capability of the called terminal. In step S50, the coded image data stored in the data buffer 19 are sent to the receiving facsimile machine through the modem 16 and line control unit 21. After all of the coded image data have been transmitted and a message confirmation (MCF) signal has been received from the called terminal, the CPU 11 proceeds to steps S46 and S47.

This process continues until it is determined in step S47 that there are no more destination numbers to call.

The third embodiment enables an announcement to be sent automatically to a plurality of called parties, even when the called parties have different types of terminal equipment. The different types may include terminals capable of receiving only analog voice signals, terminals capable of receiving only facsimile documents, and terminals of the invented type, capable of receiving both facsimile documents and coded voice signals. In transmission to terminals of the invented type, coded voice data are sent in the error correction mode, thereby avoiding degradation due to adverse line conditions.

The destination numbers of the called parties and the information about their terminal types may be left stored in the RAM 14 after the procedure in FIG. 13 is completed, so that if the user has to send another message to the same group of destinations, the same numbers and information do not have to be entered again. For example, the entire group may be assigned to a single speed dialing number.

If there is only one facsimile number on the list of facsimile numbers in the third variation, the third embodiment enables a calling terminal to communicate successfully with a called terminal regardless of whether the called terminal is a telephone answering machine, a conventional facsimile machine, or a facsimile machine of the invented type. In this case, if the user of the calling terminal simply wants to send a voice message but is not sure of the capabilities of the called terminal, the step of setting a facsimile document can be omitted. The calling terminal will send the voice message in analog form if the called terminal is a telephone answering machine, or a conventional facsimile machine connected to a telephone answering machine, and will send the voice message in coded digital form if the called terminal is a facsimile machine of the invented type.

In a variation of the third embodiment, when the OR mode is selected, and when a called terminal is capable of receiving both coded image data and coded voice data, preference can be given to the coded image data.

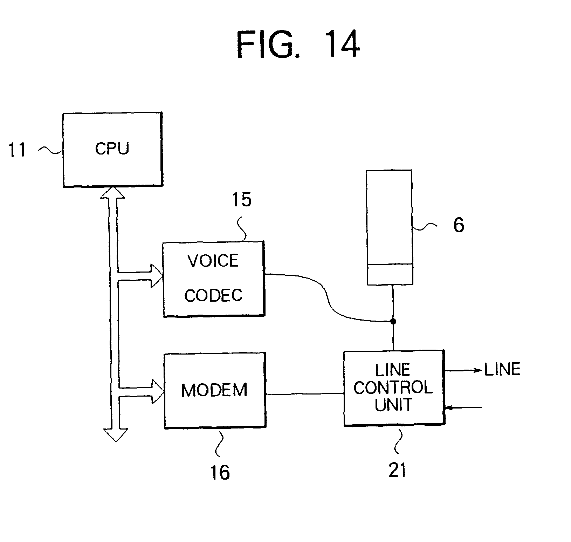

In a variation of all of the preceding embodiments, voice messages are spoken and heard through the handset 6 instead of the microphone 4 and loudspeaker 5, which need not be provided. FIG. 14 illustrates the connections in this variation. The handset 6 may be a handset built into the facsimile machine, as shown in FIG. 1, or the handset of an external telephone set to which the facsimile machine is connected. When the facsimile machine is used for originating and receiving ordinary telephone calls, the voice codec 15 is deactivated, and the handset 6 is connected through the switching device (not visible) in the line control unit 21 to the telephone line. When the facsimile machine is used as described in the preceding embodiments, the voice codec 15 is activated, the handset 6 is disconnected from the telephone line by the switching device in the line control unit 21, and the handset 6 exchanges analog voice signals with the voice codec 15.

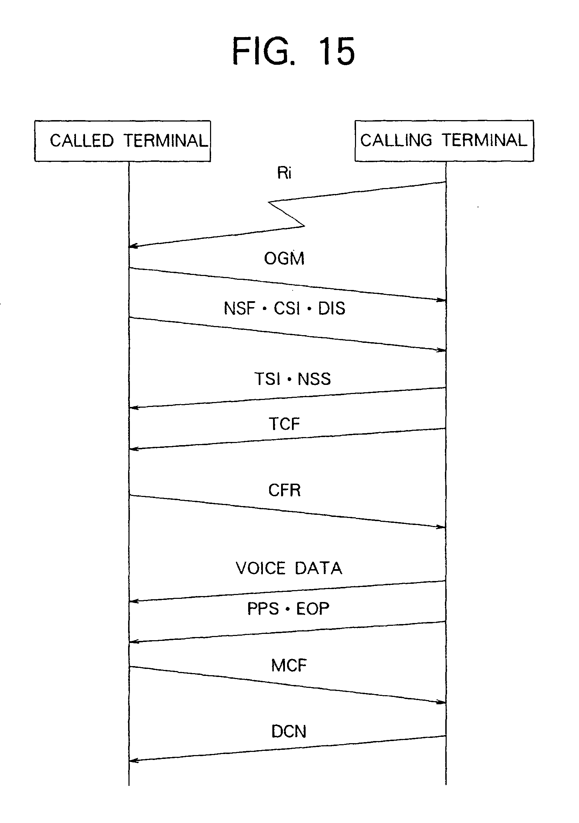

In a further variation, the invented facsimile machine answers incoming calls by sending an outgoing message before the NSF signal, and sends voice messages in real time, instead of first storing the messages in the data buffer 19. FIG. 15 illustrates the procedure for sending a voice message in this variation. After detecting the ringing signal (Ri), the called terminal sends an outgoing message (OGM) asking the calling party to leave a voice message or begin a facsimile transmission. The outgoing message is stored in coded digital form in the data buffer 19 of the called terminal, but is converted to an analog voice signal by the voice codec 15 and sent in analog form, similar to the outgoing message from a conventional telephone answering machine.

Following the outgoing message, the called terminal sends NSF, CSI, and DIS signals as described in the first embodiment. The calling terminal then sends a voice message by the same protocol as described in the first embodiment, from the sending of TSI and NSS signals to the final disconnect signal (DCN). The timing of the guidance messages displayed at the calling terminal, however, differs from the timing in the first embodiment. The user at the calling terminal is not prompted to press the start key 9 and begin recording the voice message until the calling terminal has received the confirmation signal (CFR) from the called terminal. Then, as the user at the calling terminal speaks the voice message, the voice codec 15 at the calling terminal converts the voice message to coded voice data, which are sent directly to the called terminal, without being stored in the data buffer 19 at the calling terminal.

The called terminal receives and stores the coded voice data as described in the first embodiment. When the user presses the stop key 10, the calling terminal sends the PPS and EOP signals to terminate the message.

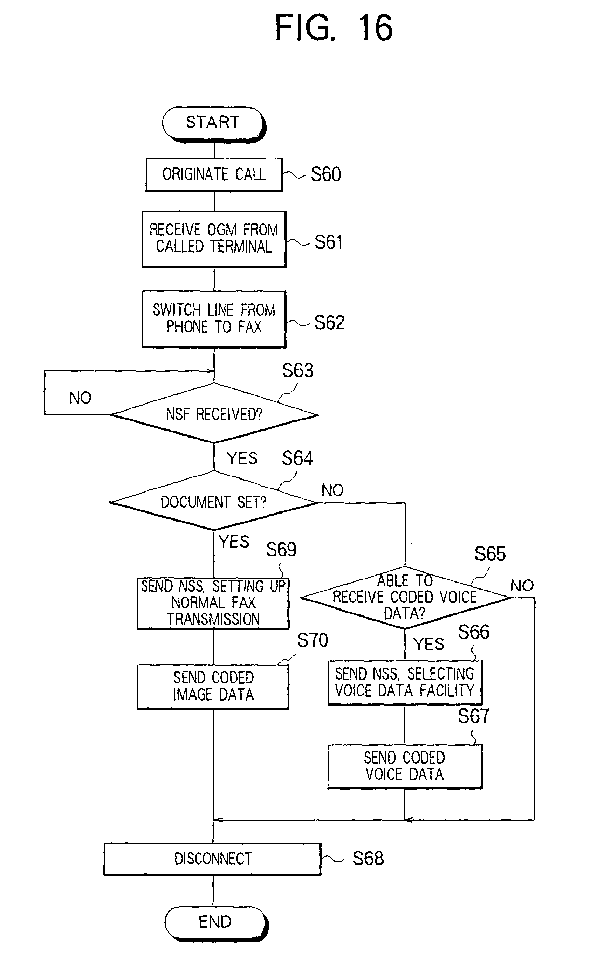

FIG. 16 illustrates the procedure at the calling terminal in this variation in more detail. In step S60, the calling terminal originates a call to the called terminal. In step S61, the calling terminal receives an analog outgoing message from the called terminal. The message typically advises the user of the calling terminal to send a facsimile transmission, adding that if the calling party is calling from a facsimile machine with a voice message function, a voice message can also be sent.

In step S62, the calling terminal displays a guidance message advising the user to switch from the telephone function to the facsimile function. The operator presses a key on the control panel 3 that operates the switching device in the line control unit 21, connecting the telephone line to the modem 16 instead of the handset 6.

In step S63, the CPU 11 in the calling terminal waits to receive an NSF signal from the called terminal. In step S64, the CPU 11 determines whether a document is set in the scanning unit 22 at the calling terminal. If a document is not set, then in step S65, the CPU 11 determines from the received NSF signal whether the called terminal is able to receive coded voice data. If the called terminal has declared this voice data reception capability in the NSF signal, then the CPU 11 sends the called terminal an NSS signal selecting the use of this capability in step S66, and displays a guidance message advising the user of the calling terminal to begin speaking a voice message. In step S67, the voice message is coded by the voice codec 15, and the coded voice data are sent to the called terminal. At the end of the message, the user presses the stop key 10, and in step S68, the calling terminal disconnects from the line.

If the called terminal does not declare itself able to receive coded voice data in the NSF signal, then steps S66 and S67 are skipped, and the call is terminated without the sending of a voice message.

If a document is set in step S64, then in step S69, the calling terminal sends the called terminal an NSS signal setting up a conventional facsimile transmission. The document is scanned by the scanning unit 22, and in step S70, the resulting coded image data are sent to the called terminal. At the end of the facsimile transmission, the line is disconnected in step S68.

In this variation, the sending of a facsimile transmission is delayed by the time taken for the outgoing message, but the other delays occasioned by the procedure in Annex D of ITU-T Recommendation T.30, such as the delay for the detection of a facsimile calling tone, are avoided.

Needless to say, the invented facsimile machine can also be used to send analog voice messages to a conventional telephone answering machine. After step S61 in FIG. 16, the user of the calling terminal simply begins speaking the message, without switching from the telephone function to the facsimile function.

The invented facsimile machine can furthermore be used to receive analog voice messages, by connecting the telephone line to the voice codec 15, which converts the incoming voice message to coded voice data that can be stored in the data buffer 19. This operation can be used when the invented facsimile machine sends an NSF signal but does not receive an NSS reply, for example. Compared with the procedures in Annex D of ITU-T Recommendation T.30, analog voice messages can be received with greater reliability, because there is no danger that an 1100-Hz frequency component in the human voice will be mistakenly identified as a facsimile calling tone.

In the preceding embodiments, facsimile documents and voice messages were transmitted from a calling facsimile machine to a called facsimile machine, but the invention can also be applied when the called facsimile machine is the transmitting facsimile machine and the calling facsimile machine is the receiving machine.

The invention is not limited to the operator guidance messages shown in the drawings.

Those skilled in the art will recognize that further variations are possible within the scope claimed below.

## Claims

1. A facsimile machine having
a scanning unit (22) for scanning documents,
a printing unit (23) for printing facsimile documents,
a voice input unit (4) for converting a spoken message to an analog input voice signal,
a voice codec (15) coupled to said voice input unit (4) for converting said analog input voice signal to coded input voice data, and
a control unit (11) coupled to said voice codec (15) for originating a call to another facsimile machine and sending the other facsimile machine said coded input voice data and input image data
obtained from the scanning unit (22),
**characterized by**
a data buffer (19) storing a profile indicating whether said coded input voice data and said input image data are mutually related,
and **characterized in that**
the control unit (11) is configured to receive a signal from the other facsimile machine indicating a capability of the other facsimile machine for receiving coded voice data before sending said coded input voice data and said input image data, and the control unit (11) is configured to select the data to send to the other facsimile machine from among said coded input voice data and said input image data according to said capability and said profile.

2. The facsimile machine of claim 1, wherein said facsimile machine employs a binary coded signaling procedure with an error correction mode.

3. The facsimile machine of claim 2, wherein said facsimile machine sends said coded input voice data as facsimile coded data.

4. The facsimile machine of claim 1, wherein said profile indicates whether said coded input voice data and said coded input image data are mutually related by an AND relationship or an OR relationship, the AND relationship meaning that both the coded input voice data and the coded input image data are to be transmitted together, the OR relationship meaning that only one of the coded input voice data and the coded input image data is to be transmitted.

5. The facsimile machine of claim 1, also having a voice output unit (5) for converting an analog output voice signal to an audible voice message, wherein the voice codec (15) also converts coded output voice data to said analog output signal, and the control unit also answers a call from a transmitting facsimile machine and sends the transmitting facsimile machine a signal indicating a capability to receive coded voice data.

6. A facsimile machine according to claim 1, wherein:
the control unit (11) also sends the other facsimile machine information indicating that the coded input voice data and the input image data are mutually related.

7. A facsimile machine according to claim 1, wherein:
the control unit (11) selects one of said coded input voice data and input image data obtained from the scanning unit (22) according to the indicated capabilities of the other facsimile machine and sends the selected data to the other facsimile machine.

8. The facsimile machine of claim 7, wherein the control unit (11) also originates a call to a telephone answering machine with a recording device, causes said voice codec (15) to convert said coded input voice data to an analog outgoing voice signal, and sends said analog outgoing voice signal to the telephone answering machine.

9. A method of sending image data and a voice message from a first facsimile machine to a second facsimile machine, comprising the steps of:
storing, in a data buffer (19) in the first facsimile machine, a profile indicating whether said voice message and said image data are mutually related,
originating a call from the first facsimile machine to the second facsimile machine;
answering the call by sending a first signal from the second facsimile machine to the first facsimile machine,
the first signal indicating a capability of the second facsimile machine to receive coded voice data;
replying to the first signal by sending a second signal from the first facsimile machine to the second facsimile machine, the second signal indicating whether to use said capability to receive coded voice data of the second facsimile machine;
converting said voice message to digitally coded voice data at said first facsimile machine;
selecting data to send to said second facsimile machine from among said digitally coded voice data and said image data according to said capability and said profile;
sending the selected data from said first facsimile machine to said second facsimile machine; and
storing the selected data in a data buffer (19) at said second facsimile machine.

10. The method of claim 9, wherein said first facsimile machine and said second facsimile machine employ a binary coded signaling procedure with an error correction mode.

11. The method of claim 9, wherein said digitally coded voice data are sent as facsimile coded data from said first facsimile machine to said second facsimile machine.

12. The method of claim 9, wherein said step of converting said voice message to digitally coded voice data is performed before said step of originating said call.

13. The method of claim 9, wherein said step of converting said voice message to digitally coded voice data is performed after said step of originating said call.

14. The method of claim 9, wherein the selected data include both the image data and the digitally coded voice data, further comprising the steps of:
sending information from said first facsimile machine to said second facsimile machine indicating that said digitally coded voice data and said image data are mutually related;
printing said image data at said second facsimile machine; and
simultaneously decoding said digitally coded voice data, thereby reproducing said voice message, at said second facsimile machine.

15. The method of claim 9, wherein the selected data are one of said image data and said digitally coded voice data.

16. The method of claim 9, further comprising the steps of:
originating a call to an additional receiving terminal; and
if the additional receiving terminal is a telephone answering machine converting said digitally coded voice data to an analog voice signal at said first facsimile machine, sending said analog voice signal to said additional receiving terminal as said voice message; and recording said analog voice signal at said one of said additional receiving terminal.

17. The method of claim 15, further comprising the steps of:
originating a call to an additional receiving terminal; and
if the additional receiving terminal is capable of receiving both said digitally coded voice data and said digitally coded image data, selecting said digitally coded voice data for transmission to said additional receiving terminal.

18. The method of claim 15, further comprising the steps of:
originating a call to an additional receiving terminal; and
if the additional receiving terminal is capable of receiving both said digitally coded voice data and said digitally coded image data, selecting said digitally coded image data for transmission to said additional receiving terminal.

## Patentansprüche

1. Ein Faxgerät, das
eine Abtasteinheit (22) zum Abtasten von Dokumenten, eine Druckeinheit (23), zum Drucken von Faxdokumenten,
eine Spracheingabeeinheit (4) zum Umwandeln einer gesprochenen Nachricht in ein analoges Spracheingabesignal,
einen Sprachcodierer (15), der mit der Spracheingabeeinheit (4) verbunden ist, zum Umwandeln des analogen Spracheingabesignals in codierte Spracheingabedaten, und
eine Steuereinheit (11) hat, die mit dem Sprachcodierer (15) verbunden ist, um einen Anruf an ein anderes Faxgerät auszulösen und dem anderen Faxgerät die codierten Spracheingabesignale und Bildeingabedaten, die von der Abtasteinheit (22) erhalten worden sind, zu senden,
**gekennzeichnet durch** einen Datenpuffer (19), der ein Profil speichert, das angibt, ob die codierten Spracheingabedaten und die Bildeingabedaten miteinander in Beziehung stehen, und
**dadurch gekennzeichnet, dass**
die Steuereinheit (11) eingerichtet ist, vor dem Senden der codierten Spracheingabedaten und der Bildeingabedaten ein Signal von dem anderen Faxgerät zu empfangen, welches die Fähigkeit des anderen Faxgerätes anzeigt, codierte Spracheingabedaten zu empfangen, und **dadurch**, dass
die Steuereinheit (11) eingerichtet ist, die an das andere Faxgerät zu sendenden Daten aus den codierten Spracheingabedaten und den Bildeingabedaten gemäß der Fähigkeit und dem Profil auszuwählen.

2. Faxgerät nach Anspruch 1, wobei das Faxgerät ein binär codiertes Signalverfahren mit einem Fehlerkorrekturmodus anwendet.

3. Faxgerät nach Anspruch 2, wobei das Faxgerät die codierten Spracheingabedaten als codierte Faxdaten sendet.

4. Faxgerät nach Anspruch 1, wobei das Profil anzeigt, ob die codierten Spracheingabedaten und die codierten Bildeingabedaten durch eine UND-Beziehung oder durch eine ODER-Beziehung miteinander verbunden sind, wobei die UND-Beziehung bedeutet, dass beide, die codierten Spracheingabedaten und die codierten Bildeingabedaten zusammen zu übertragen sind, und die ODER-Beziehung bedeutet, dass nur entweder die codierten Spracheingabedaten oder die codierten Bildeingabedaten zu übertragen sind

5. Faxgerät nach Anspruch 1, das auch eine Sprachausgabeeinheit (5) hat, um ein analoges Sprachausgabesignal in eine hörbare Sprachnachricht umzuwandeln, wobei der Sprachcodierer (15) auch codierte Sprachausgabedaten in das analoge Ausgangssignal umwandelt, und die Steuereinheit auch einen Anruf von einem übertragenden Faxgerät beantwortet und dem übertragenen Faxgerät ein Signal schickt, welches eine Fähigkeit anzeigt, codierte Sprachdaten zu empfangen.

6. Faxgerät nach Anspruch 1, wobei die Steuereinheit (11) dem anderen Faxgerät auch die Information schickt, die anzeigt, dass die codierten Spracheingabedaten und die Bildeingabedaten miteinander verbunden sind.

7. Faxgerät nach Anspruch 1, wobei die Steuereinheit (11) entweder die codierten Spracheingabedaten oder die Bildeingabedaten, die von der Abtasteinheit (22) erhalten worden sind, gemäß der angezeigten Fähigkeiten des anderen Faxgerätes auswählt und die ausgewählten Daten an das andere Faxgerät schickt.

8. Faxgerät nach Anspruch 7, wobei die Steuereinheit (11) auch einen Anruf an einen Telefonanrufbeantworter mit einem Aufnahmegerät auslöst und bewirkt, dass der Sprachcodierer (15) die codierten Spracheingabedaten in ein analoges Ausgangssprachsignal umwandelt, und das analoge Ausgangssprachsignal an den Telefonanrufbeantworter schickt.

9. Verfahren, Bilddaten und Sprachnachrichten von einem ersten Faxgerät an ein zweites Faxgerät zu schicken, welches die Schritte umfasst:
Speichern eines Profils, das angibt, ob die Sprachnachricht und die Bilddaten miteinander verbunden sind, in einem Datenpuffer (19) in dem ersten Faxgerät;
Auslösen eines Anrufes von dem ersten Faxgerät an das zweite Faxgerät;
Beantworten des Anrufes durch Senden eines ersten Signals von dem zweiten Faxgerät an das erste Faxgerät, wobei das erste Signal die Fähigkeit des zweiten Faxgerätes anzeigt, codierte Sprachdaten zu empfangen;
Antworten auf das erste Signal durch Senden eines zweiten Signals von dem ersten Faxgerät an das zweite Faxgerät, wobei das zweite Signal anzeigt, ob die Fähigkeit des zweiten Faxgerätes, codierte Sprachdaten zu empfangen, genutzt werden soll;
Umwandeln der Sprachnachricht in digital codierte Sprachdaten in dem ersten Faxgerät;
Auswählen der an das zweite Faxgerät zu sendenden Daten aus den digital codierten Sprachdaten und den Bilddaten gemäß der Fähigkeit und dem Profil;
Senden der ausgewählten Daten von dem ersten Faxgerät an das zweite Faxgerät; und
Speichern der ausgewählten Daten in einem Datenpuffer (19) in dem zweiten Faxgerät.

10. Verfahren nach Anspruch 9, wobei das erste Faxgerät und das zweite Faxgerät eine binär codierte Signalverarbeitung mit einem Fehlerkorrekturmodus anwenden.

11. Verfahren nach Anspruch 9, wobei die digital codierten Sprachdaten als faxcodierte Daten von dem ersten Faxgerät an das zweite Faxgerät geschickt werden.

12. Verfahren nach Anspruch 9, wobei der Schritt des Umwandelns der Sprachnachricht in digital codierte Sprachdaten vor dem Schritt des Auslösens des Anrufes durchgeführt wird.

13. Verfahren nach Anspruch 9, wobei der Schritt des Umwandelns der Sprachnachricht in digital codierte Sprachdaten nach dem Schritt des Auslösens des Anrufes durchgeführt wird.

14. Verfahren nach Anspruch 9, wobei die ausgewählten Daten sowohl Bilddaten als auch die digital codierten Sprachdaten umfassen und die Methode weiterhin die folgenden Schritte umfasst:
Senden von Information von dem ersten Faxgerät an das zweite Faxgerät, die anzeigt, dass die digital codierten Sprachdaten und die Bilddaten miteinander verbunden sind;
Drucken der Bilddaten in dem zweiten Faxgerät; und
gleichzeitiges Decodieren der digital codierten Sprachdaten in dem zweiten Faxgerät, wodurch die Sprachnachricht wiedergegeben wird.

15. Verfahren nach Anspruch 9, wobei die ausgewählten Daten entweder die Bilddaten oder die digital codierten Sprachdaten sind.

16. Verfahren nach Anspruch 9, das weiterhin die Schritte umfasst:
Auslösen eines Anrufes an ein zusätzliches Empfangsgerät; und
Umwandeln der digital codierten Sprachdaten in ein analoges Sprachsignal in dem ersten Faxgerät, wenn das zusätzliche Empfangsgerät ein Telefonanrufbeantworter ist;
Senden des analogen Sprachsignals als Sprachnachricht an das zusätzliche Empfangsgerät und
Aufnehmen des analogen Sprachsignals in jenem zusätzlichen Empfangsgerät.

17. Verfahren nach Anspruch 15, das zusätzlich die Schritte umfasst:
Auslösen eines Anrufes an ein zusätzliches Empfangsgerät; und
Auswählen der digital codierten Sprachdaten für die Übertragung an das zusätzliche Empfangsgerät, wenn das zusätzliche Empfangsgerät ein Telefonanrufbeantworter ist.

18. Verfahren nach Anspruch 15, das zusätzlich die Schritte umfasst:
Auslösen eines Anrufes an ein zusätzliches Empfangsgerät; und
Auswählen der digital codierten Bilddaten für die Übertragung an das zusätzliche Empfangsgerät, wenn das zusätzliche Empfangsgerät ein Telefonanrufbeantworter ist.

## Revendications

1. Dispositif de fac-similé ayant
- une unité de numérisation (22) pour scanner les documents.
- une unité d'impression (23) pour imprimer les documents de fac-similé,
- une unité d'entrée vocale (4) pour convertir un message parlé dans un signal vocal d'entrée analogue,
- un codeur vocal (15) couplé à ladite unité d'entrée vocale (4) pour convertir ledit signal vocal d'entrée analogue en données vocales d'entrée codées, et
- une unité de commande (11) couplée audit codeur vocal (15) pour produire un appel à l'autre dispositif de fac-similé et envoyer à l'autre dispositif de fac-similé lesdites données vocales d'entrée codées et les données d'images d'entrée obtenues de l'unité de numérisation (22),
**caractérisée par**
- un tampon de données (19) stockant un profil indiquant si lesdites données vocales d'entrée codées et lesdites données d'images d'entrée sont en relation réciproque,
et **caractérisé en ce que**
- l'unité de commande (11) est configurée pour recevoir un signal de l'autre dispositif de fac-similé indiquant une capacité de l'autre dispositif de fac-similé pour recevoir les données vocales codées avant envoyer lesdites données vocales d'entrée codées et lesdites données d'images d'entrée, et l'unité de commande (11) est configurée pour sélecter les données pour envoyer à l'autre dispositif de fac-similé d'entre lesdites données vocales d'entrée codées et lesdites données d'images d'entrée selon ladite capacité et ledit profil.

2. Dispositif de fac-similé selon la revendication 1, où ledit dispositif de fac-similé utilise une procédure de signalisation codée de manière binaire avec un mode de correction d'erreurs.

3. Dispositif de fac-similé selon la revendication 2 où ledit dispositif de fac-similé envoie lesdites données vocales d'entrée codées comme des données codées de fac-similé.

4. Dispositif de fac-similé selon la revendication 1, où ledit profil indique si lesdites données vocales d'entrée codées et lesdites données d'images d'entrée sont en relation réciproque par une relation AND ou une relation OR, la relation AND signifiant que tant les données vocales d'entrée codées que les données d'images d'entrée vont être transmises ensemble, la relation OR signifiant que seulement l'une des données vocales d'entrée codées et des données d'images d'entrée est pour être transmise.

5. Dispositif de fac-similé selon la revendication 1, ayant aussi une unité de sortie vocale (5) pour convertir un signal vocal de sortie analogue dans un message vocal audible, où le codeur vocal (15) convertit aussi les données vocales de sortie codées dans ledit signal de sortie analogue, et l'unité de commande répond aussi à un appel d'un dispositif de fac-similé de transmission et envoie au dispositif de fac-similé de transmission un signal indiquant une capacité de recevoir les données vocales codées.

6. Dispositif de fac-similé selon la revendication 1, où:
- l'unité de commande (11) envoie aussi à l'autre dispositif de fac-similé l'information indiquant que les données vocales d'entrée codées et les données d'images d'entrée sont en relation réciproque.

7. Dispositif de fac-similé selon la revendication 1, où:
- l'unité de commande (11) sélecte l'une desdites données vocales d'entrée codées et des données d'images d'entrée obtenues de l'unité de numérisation (22) selon les capacités indiquées de l'autre dispositif de fac-similé et envoie les données choisies à l'autre dispositif de fac-similé.

8. Dispositif de fac-similé selon la revendication 7, où l'unité de commande (11) produit aussi un appel à un dispositif de réponse par téléphone avec un dispositif d'enregistrement, cause audit codeur vocal (15) à convertir lesdites données vocales d'entrée codées dans un signal vocal de sortie analogue, et envoie ledit signal vocal de sortie analogue au dispositif de réponse par téléphone.

9. Une méthode pour envoyer des données d'images et un message vocal d'un premier dispositif de fac-similé à un second dispositif de fac-similé, comprenant les étapes de:
- stocker, dans un tampon de données (19) dans le premier dispositif de fac-similé, un profil indiquant si ledit message vocal et lesdites données d'images sont en relation réciproque,
- produire un appel du premier dispositif de fac-similé vers le second dispositif de fac-similé,
- répondre à l'appel en envoyant un premier signal du second dispositif de fac-similé vers- le premier dispositif de fac-similé,
- le premier signal indiquant une capacité du second dispositif de fac-similé de recevoir les données vocales codées,
- répondre au premier signal en envoyant un second signal du premier dispositif de fac-similé vers le second dispositif de fac-similé, le second signal indiquant si utiliser ladite capacité de recevoir les données vocales codées du second dispositif de fac-similé,
- convertir ledit message vocal en données vocales codées numériquement audit premier dispositif de fac-similé,
- sélecter les données pour envoyer audit second dispositif de fac-similé d'entre lesdites données vocales codées numériquement et lesdites données d'images selon ladite capacité et ledit profil,
- envoyer lesdites données sélectées dudit premier dispositif de fac-similé vers le second dispositif de fac-similé, et
- stocker les données sélectées dans un tampon de données (19) audit second dispositif de fac-similé.

10. Méthode selon la revendication 9, où ledit premier dispositif de fac-similé et ledit second dispositif de fac-similé utilisent une procédure de signalisation codée de manière binaire avec un mode de correction d'erreurs.

11. Méthode selon la revendication 9, où lesdites données vocales codées numériquement sont envoyées comme des données codées de fac-similé dudit premier dispositif de fac-similé audit second dispositif de fac-similé.

12. Méthode selon la revendication 9, où ladite étape pour convertir ledit message vocal en données vocales codées numériquement est réalisée avant ladite étape de produire ledit appel.

13. Méthode selon la revendication 9, où ladite étape pour convertir ledit message vocal en données vocales codées numériquement est réalisée après ladite étape de produire ledit appel.

14. Méthode selon la revendication 9, où les données sélectées comprennent tant les données d'images que les données vocales codées numériquement, comprenant de plus les étapes de:
- envoyer l'information dudit premier dispositif de fac-similé audit second dispositif de fac-similé indiquant que lesdites données vocales codées numériquement et lesdites données d'images sont en relation réciproque;
- imprimer lesdites données d'images audit second dispositif de fac-similé; et
- décoder simultanément lesdites données vocales codées numériquement, de cette manière en reproduisant ledit message vocal, audit second dispositif de fac-similé.

15. Méthode selon la revendication 9, où les données sélectées sont l'une desdites données d'images et desdites données vocales codées numériquement.

16. Méthode selon la revendication 9, comprenant de plus les étapes de:
- produire un appel à un terminal de réception additionnel; et
- si le terminal de réception additionnel est un dispositif de réponse par téléphone convertissant lesdites données vocales codées numériquement dans un signal vocal analogue audit premier dispositif de fac-similé, envoyant ledit signal vocal analogue audit terminal de réception additionnel comme ledit message vocal; et enregistrant ledit signal vocal analogue audit l'un dudit terminal de réception additionnel.

17. Méthode selon la revendication 15, comprenant de plus les étapes de:
- produire un appel à un terminal de réception additionnel; et
- si le terminal de réception additionnel est capable de recevoir tant lesdites données vocales codées numériquement que lesdites données d'images codées numériquement, sélectant lesdites données vocales codées numériquement pour transmission audit terminal de réception additionnel.

18. Méthode selon la revendication 15, comprenant de plus les étapes de:
- produire un appel à un terminal de réception additionnel; et
- si le terminal de réception additionnel est capable de recevoir tant lesdites données vocales codées numériquement que lesdites données d'images codées numériquement, sélectant lesdites données d'images codées numériquement pour transmission audit terminal de réception additionnel.
